# EUROPEAN PATENT SPECIFICATION

(11) **EP 3 255 911 B1**
(45) Date of publication and mention of the grant of the patent: **11.12.2019**
(21) Application number: 15884380.5
(22) Date of filing: 15.09.2015
(51) Int. Cl.: H04W 8/18, H04W 48/18

(54) **METHOD AND APPARATUS FOR ACQUIRING NETWORK SERVICE VIA FREQUENCY BAND INFORMATION**
VERFAHREN UND VORRICHTUNG ZUR ERFASSUNG VON NETZWERKDIENST ÜBER FREQUENZBANDINFORMATIONEN
PROCÉDÉ ET APPAREIL POUR ACQUÉRIR UN SERVICE DE RÉSEAU PAR L'INTERMÉDIAIRE D'INFORMATIONS DE BANDE DE FRÉQUENCE

(30) Priority: 06.03.2015 CN 201510100889
(43) Date of publication of application: 13.12.2017
(73) Proprietor: ZTE Corporation, Shenzhen, Guangdong 518057 (CN)
(72) Inventor: ZHUANG, Li, Shenzhen Guangdong 518057 (CN); XIANG, Haitao, Shenzhen Guangdong 518057 (CN)
(74) Representative: Bandpay & Greuter
(86) International application number: PCT/CN2015/089653
(87) International publication number: WO 2016/141701

(56) References cited:
- EP-A1- 1 681 892
- EP-A1- 2 728 940
- WO-A1-2008/077025
- CN-A- 1 946 236
- CN-A- 101 390 344
- CN-A- 103 595 438
- US-A1- 2011 256 869

## Description

### Technical Field

The present invention relates to, but is not limited to, the field of mobile communication technology.

### Background

With development of wireless communication technology today, network systems in every country in the world are more and more, and the supported frequency bands are increasing continually as well. With the continuous integration of global services, terminal devices need to support more and more frequency bands to meet the requirements for registering to networks in different countries. At present, the global services are increasing and terminal users are also increasing constantly, so that due to too many users on some network frequency bands, network performance is degraded, causing network congestion.

The document EP 1681892 A1 discloses an automatic frequency band selection method in a multi-band supported mobile station. In the method, the mobile station checks a Mobile Country Code (MCC) and a Mobile Network Code (MNC) from system information when international roaming has occurred, selects a frequency band corresponding to the MCC and MNC checked from a frequency band information table as a search frequency band, the frequency band information table storing in advance information for frequency bands used according to each country/network, and searches for the selected frequency band, thereby performing network synchronization.

The document EP 2728940 A1 discloses a public land mobile network (PLMN) selection procedure may be generated that, when implemented, disables at least one resource of a particular mobile device to prevent a scan of particular ones of PLMNS that exhibit supported access technologies, and/or supported frequency bands of supported access technologies, incompatible with a preferred operation of the particular mobile terminal.

### Summary

The following is a summary of the subject matter described herein in detail. This summary is not intended to limit the protection scope of the claims.

The invention is defined by the appended claims.

This disclosure provides a method and apparatus for acquiring a network service via frequency band information to improve efficiency of acquisition of the network service. A method for acquiring a network service via frequency band information according to claim 1 and an apparatus for acquiring a network service via frequency band information according to claim 3 are provided. Further improvements and embodiments are provided in the dependent claims.

This disclosure also discloses a method for acquiring a network service via frequency band information, applied to a terminal device, which includes:
establishing, by the terminal device, a channel connection;
generating final frequency band information of each system of the terminal device according to a model of the terminal device, a mobile country code (MCC) and a mobile network code (MNC) when determining that final frequency band information of the terminal device is not generated; and
acquiring, by the terminal device, the network service according to the final frequency band information.
In an exemplary embodiment, the final frequency band information includes final enable frequency band information and final disable frequency band information; and
generating final frequency band information of each system of the terminal device according to a model of the terminal device, a mobile country code (MCC) and a mobile network code (MNC) when determining that final frequency band information of the terminal device is not generated includes:
   acquiring the MCC and the MNC of a network to which the terminal device registers;
   finding, in a configuration information table, enable frequency band information and disable frequency band information of the each system of the terminal device according to the model of the terminal device, the MCC and the MNC; and
   generating the final enable frequency band information and the final disable frequency band information of the each system of the terminal device according to frequency band information of the each system supported by the terminal device and the found enable frequency band information and the found final disable frequency band information of the each system of the terminal device.

In an exemplary embodiment, generating the final enable frequency band information and the final disable frequency band information of the each system of the terminal device according to frequency band information of the each system supported by the terminal device and the found enable frequency band information and the found disable frequency band information of the each system of the terminal device includes:
performing "AND" operation on the frequency band information of the each system supported by the terminal device and the found enable frequency band information of the each system of the terminal device in terms of the each system respectively, and then performing "OR" operation on a result obtained after the "AND" operation for the each system, and using a result of the "OR" operation as the final enable frequency band information of the terminal device; and
performing "AND" operation on the frequency band information of the each system supported by the terminal device and the found disable frequency band information of the each system of the terminal device in terms of the each system respectively, and then performing "AND" operation again on a result obtained after the "AND" operation for the each system, and using a result of the "AND" operation performed again as the final disable frequency band information of the terminal device.

In an exemplary embodiment, acquiring, by the terminal device, the network service according to the final frequency band information includes:
re-initiating a network service acquisition request carrying the final enable frequency band information and the final disable frequency band information of the terminal device.

In an exemplary embodiment, a system of the terminal device includes one or more of the following systems: Global System for Mobile Communications (GSM), Wideband Code Division Multiple Access (WCDMA) and Long Term Evolution (LTE).

This disclosure also discloses an apparatus for acquiring a network service via frequency band information, provided in a terminal device, which includes:
a connection module configured to establish a channel connection;
a generation module configured to generate final frequency band information of each system of the terminal device according to a model of the terminal device, a mobile country code (MCC) and a mobile network code (MNC) when determining that final frequency band information of the terminal device is not generated; and
a service acquisition module configured to acquire the network service according to the final frequency band information.

In an exemplary embodiment, the final frequency band information includes final enable frequency band information and final disable frequency band information; and
the generation module includes an acquiring submodule, a finding submodule and a generating submodule, herein
the acquiring submodule is configured to acquiring the MCC and the MNC of a network with which the terminal device registers;
the finding submodule is configured to find, in a configuration information table, enable frequency band information and disable frequency band information of the each system of the terminal device according to the model of the terminal device, the MCC and the MNC; and
the generating submodule is configured to generate the final enable frequency band information and the final disable frequency band information of the each system of the terminal device according to frequency band information of the each system supported by the terminal device and the found enable frequency band information and the found disable frequency band information of the each system of the terminal device.

In an exemplary embodiment, the generating submodule is configured to perform "AND" operation on the frequency band information of the each system supported by the terminal device and the found enable frequency band information of the each system of the terminal device in terms of the each system respectively, and then perform "OR" operation on a result obtained after the "AND" operation for the each system, and use a result of the "OR" operation as the final enable frequency band information of the terminal device; and perform "AND" operation on the frequency band information of the each system supported by the terminal device and the found disable frequency band information of the each system of the terminal device in terms of each system respectively, and then perform "AND" operation again on a result obtained after the "AND" operation for the each system, and use a result of the "AND" operation performed again as the final disable frequency band information of the terminal device.

In an exemplary embodiment, the service acquisition module is configured to re-initiate a network service acquisition request carrying the final enable frequency band information and the final disable frequency band information of the terminal device.

In an exemplary embodiment, a system of the terminal device includes one or more of the following systems: Global System for Mobile Communications (GSM), Wideband Code Division Multiple Access (WCDMA) and Long Term Evolution (LTE).

This disclosure also discloses a computer readable storage medium which has computer executable instructions stored therein and when executed by a computer, cause the computer to implement any one method described above.

In the scheme described above, the frequency band to which the terminal registers is controlled by acquiring the mobile country code (MCC) and the mobile network code (MNC) of the registered public land mobile network (RPLMN) to which the terminal registers and according to the model of the terminal, thereby improving efficiently the time for the terminal to acquire the network service and improving the efficiency of the acquisition of the network service and the utilization of the network.

After the accompanying drawings and detailed description are read and understood, other aspects can be understood.

### Brief Description of Drawings

FIG. 1 is a flow chart of a method for acquiring a network service via frequency band information in accordance with a first embodiment of the present invention.
FIG. 2 is a block diagram of an apparatus for acquiring a network service via frequency band information in accordance with the first embodiment of the present invention.
FIG. 3 is a flow chart of a method for acquiring a network service via frequency band information in accordance with a second embodiment of the present invention.
FIG. 4 is a schematic diagram of a data storage structure in a configuration information table in accordance with the second embodiment of the present invention.

### Detailed Description

Embodiments of the present invention will be described in detail below in conjunction with the accompanying drawings. It is should be noted that the embodiments in the present application and features in the embodiments can be combined with each other arbitrarily without conflict.

### The first embodiment

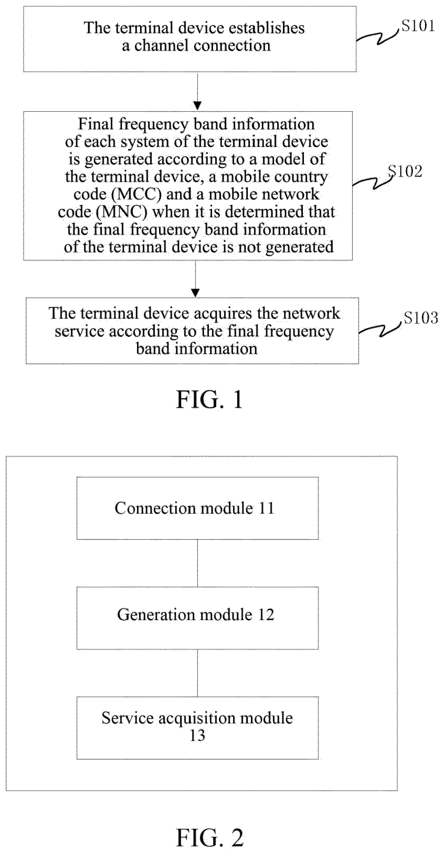

As shown in FIG. 1, an embodiment of the present invention provides a method for acquiring a network service via frequency band information, applied to a terminal device. The method includes the following steps S101-S103.

In step S101, the terminal device establishes a channel connection.

In step S102, final frequency band information of each system of the terminal device is generated according to a model of the terminal device, a mobile country code (MCC) and a mobile network code (MNC) when it is determined that the final frequency band information of the terminal device is not generated.

Herein, the final frequency band information includes final enable frequency band information and final disable frequency band information. The system of the terminal device includes one or more of the following systems: Global System for Mobile Communications (GSM), Wideband Code Division Multiple Access (WCDMA) and Long Term Evolution (LTE).

The step S102 may include:
the MCC and the MNC of a network to which the terminal device registers are acquired;
enable frequency band information and disable frequency band information of each system of the terminal device are found in a configuration information table according to the model of the terminal device, the MCC and the MNC; and
the final enable frequency band information and final disable frequency band information of each system of the terminal device are generated according to frequency band information of each system supported by the terminal device and the found enable frequency band information and the found disable frequency band information of each terminal of the terminal device.

The step S102 may further includes:
"AND" operation is performed on the frequency band information of each system supported by the terminal device and the found enable frequency band information of each system of the terminal device in terms of each system respectively, and then "OR" operation is performed on a result obtained after the "AND" operation for each system, and a result of the "OR" operation is used as the final enable frequency band information of the terminal device; and
"AND" operation is performed on the frequency band information of each system supported by the terminal device and the found disable frequency band information of each system of the terminal device in terms of each system respectively, and then "AND" operation is performed again on a result obtained after the "AND" operation for each system, and a result of the "AND" operation performed again is used as the final disable frequency band information of the terminal device.

In step S103, the terminal device acquires the network service according to the final frequency band information.

The step S103 may include: a network service acquisition request is re-initiated; herein the network service acquisition request carries the final enable frequency band information and the final disable frequency band information of the terminal device.

As shown in FIG. 2, an embodiment of the present invention further provides an apparatus for acquiring a network service via frequency band information, provided in a terminal device. The apparatus includes a connection module 11, a generation module 12 and a service acquisition module 13.

The connection module 11 is configured to establish a channel connection.

The generation module 12 is configured to generate final frequency band information of each system of the terminal device according to a model of the terminal device, a mobile country code (MCC) and a mobile network code (MNC) when determining that the final frequency band information of the terminal device is not generated.

The acquiring service module 13 is configured to acquire the network service according to the final frequency band information.

The final frequency band information includes final enable frequency band information and final disable frequency band information. The system of the terminal device includes one or more of the following systems: Global System for Mobile Communications (GSM), Wideband Code Division Multiple Access (WCDMA) and Long Term Evolution (LTE).

In an exemplary embodiment, the generation module 12 includes an acquiring submodule, a finding submodule and a generating submodule.

The acquiring submodule is configured to acquire the MCC and MNC of a network to which the terminal device registers.

The finding submodule is configured to find, in a configuration information table, enable frequency band information and disable frequency band information of each system of the terminal device according to the model of the terminal device, the MCC and the MNC.

The generating submodule is configured to generate the final enable frequency band information and the final disable frequency band information of each system of the terminal device according to the frequency band information of each system supported by the terminal device and the found enable frequency band information and the found disable frequency band information of each system of the terminal device.

In an exemplary embodiment, the generating submodule is configured to perform "AND" operation on the frequency band information of each system supported by the terminal device and the found enable frequency band information of each system of the terminal device in terms of each system respectively, then perform "OR" operation on a result obtained after the "AND" operation for each system, and use a result of the "OR" operation as the final enable frequency band information of the terminal device; and perform "AND" operation on the frequency band information of each system supported by the terminal device and the found disable frequency band information of each system of the terminal device in terms of each system respectively, then perform "AND" operation again on a result obtained after the "AND" operation for each system, and use a result of the "AND" operation performed again as the final disable frequency band information of the terminal device.

The acquiring service module 13 is configured to re-initiate a network service acquisition request, herein the network service acquisition request carries the final enable frequency band information and the final disable frequency band information of the terminal device.

In the scheme described above, the network service is acquired via the frequency band information, thereby decreasing the time to acquire the network service and improving the utilization of the network.

### The second embodiment

Taking a mobile terminal device as an example, the technical scheme of the embodiments of the present invention will be further described below.

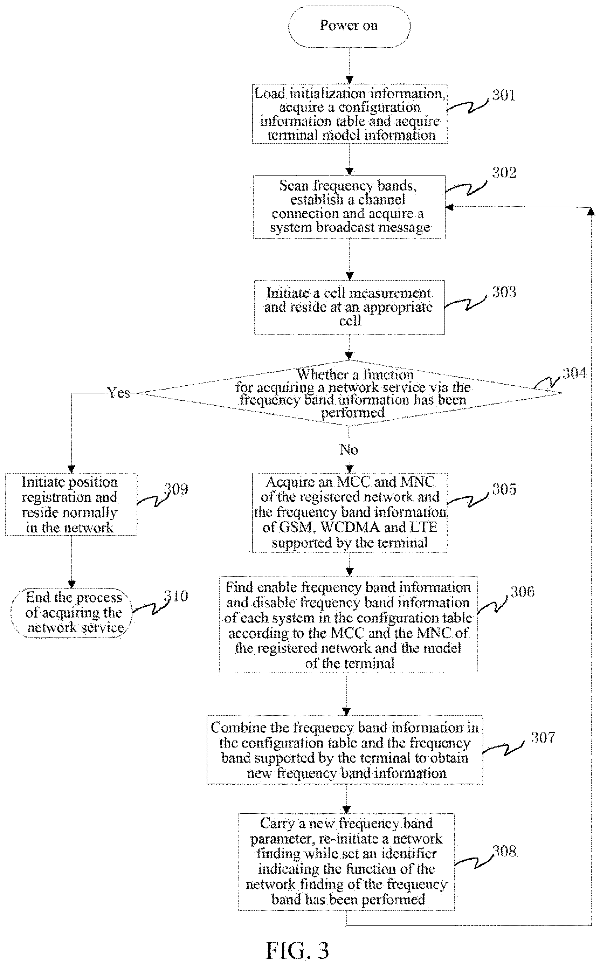

As shown in FIG. 3, an embodiment of the present invention provides a method for acquiring a network service via frequency band information, applied to a terminal device. The method includes the following steps 301-310.

In step 301, the mobile terminal device is powered on to start, loads initialization information, acquires a configuration information table, acquires a model of the mobile terminal device, and acquires a network service acquisition identifier which is False by default at the initialization.

In step 302, the mobile terminal device scans frequency bands, establishes a channel connection and acquires a system broadcast message.

In step 303, the mobile terminal initiates a cell measurement and resides at an appropriate cell.

In step 304, it is determined whether the function for acquiring a network service via the frequency band information has been performed, and if yes, step 309 will be continued to be executed, and if no, step 305 will be continued to be executed.

In step 305, an MCC and MNC of a network to the mobile terminal device registers are acquired while the frequency band information of each system supported by the terminal is acquired from a signaling message.

In step 306, corresponding enable frequency band and disable frequency band information of each system are found in the configuration information table according to the MCC and MNC of the registered network and the model of the terminal.

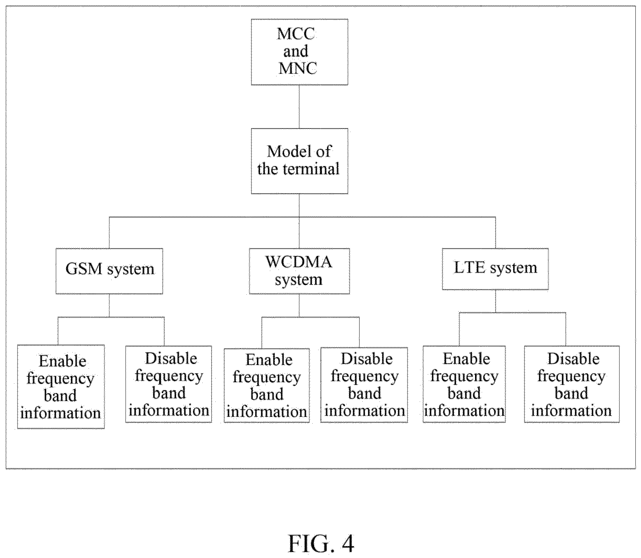

FIG. 4 is a schematic diagram of a data storage structure in a configuration information table. In this configuration information table, the enable and disable frequency band information for three systems, i.e., GSM, WCDMA and LTE, of the terminal device can be determined uniquely according to the MCC, MNC and the model of the terminal device. For example, the MCC/MNC 46000 and the model A of the terminal device correspond to enable and disable frequency band information of three systems, i.e., GSM, WCDMA and LTE, of the terminal device, and the MCC/MNC 46000 and the model B of the terminal device correspond to another group of enable and disable frequency band information.

In step 307, "AND" operation is performed on the frequency band information of each system supported by the mobile terminal device and the acquired enable frequency band information of each system in the configuration information table, and then "OR" operation is performed on the frequency band information supported by the mobile terminal device and a result obtained after the "AND" operation to obtain the frequency band information of the mobile terminal device required to be enabled on the system, and "AND" operation is performed on the frequency band information of the system supported by the mobile terminal device and the disable frequency band information of the system in the configuration information table to obtain finally disable frequency band information of the system.

In step 308, new frequency band information is carried, and a network service acquisition request is re-initiated while a network service acquisition identifier is set to be True, and step 302 will be executed.

In step 309, position registration is initiated, and the network is normally resided and the network service is acquired.

In step 310, the process of acquiring the network service ends and the mobile terminal device resides in the network normally.

People having ordinary skill in the art may understand that all or part of steps in the embodiments described above can be carried out by using computer programs, which may be stored in a computer readable storage medium. The computer programs, when executed on the corresponding hardware platform (such as a system, a device, an apparatus and a component and the like), include one or a combination of steps in the method embodiments.

In an exemplary embodiment, all or part of steps in the embodiments described above can be carried out by using integrated circuits. These steps can be implemented by making them one by one into individual integrated circuit modules or by making a plurality of modules thereof into a single integrated circuit module.

Various apparatuses/functional modules/functional units in the embodiments described above, which can be implemented by using general computing apparatuses, can be centralized on a single computing apparatus or distributed in a network formed by multiple computing apparatus.

Various apparatuses/functional modules/functional units in the embodiments described above, when implemented in a form of software functional module and sold or used as stand-stone products, can be stored in a computer readable storage medium. The computer readable storage medium mentioned above may be a read-only memory, a magnetic disk or an optical disk, etc.

### Industrial Applicability

In the embodiments of the present invention, the frequency band in which the terminal registers is controlled by acquiring the MCC and the MNC registered by the terminal and according to the model of the terminal, thereby improving efficiently the time for the terminal to acquire the network service, and improving the efficiency of the acquisition of the network service and the utilization of the network.

## Claims

1. A method for acquiring a network service via frequency band information, the method being performed by a mobile terminal device, and the method comprising:
establishing (S101, 302), by the mobile terminal device, a channel connection and acquiring a system broadcast message;
**characterized by** further comprising:
generating (SI02) final frequency band information of each network system of the mobile terminal device according to a model of the mobile terminal device, a mobile country code, MCC, and a mobile network code, MNC, when determining that final frequency band information of the mobile terminal device is not generated; and
acquiring (SI03), by the mobile terminal device, the network service according to the final frequency band information;
wherein the final frequency band information comprises final enable frequency band information and final disable frequency band information; and
the generating (S103) final frequency band information of each network system of the mobile terminal device according to a model of the mobile terminal device, a mobile country code, MCC, and a mobile network code, MNC, when determining that final frequency band information of the mobile terminal device is not generated comprises:
acquiring (305) the MCC and the MNC of a network to which the mobile terminal device registers and acquiring frequency band information of each network system supported by the mobile terminal device from the system broadcast message;
finding (306), in a configuration information table acquired when the mobile terminal device is powered on to start, enable frequency band information and disable frequency band information of the each network system of the mobile terminal device according to the model of the mobile terminal device, the MCC and the MNC; and
generating (307) the final enable frequency band information and the final disable frequency band information of the each network system of the mobile terminal device according to the frequency band information of the each network system supported by the mobile terminal device that is acquired from the system broadcast message and the enable frequency band information and the disable frequency band information of the each network system of the mobile terminal device that are found in the configuration information table;
wherein the acquiring (SI03), by the mobile terminal device, the network service according to the final frequency band information comprises:
re-initiating (308) a network service acquisition request, wherein the network service acquisition request carries the final enable frequency band information and the final disable frequency band information of the mobile terminal device;
wherein the generating (307) the final enable frequency band information and the final disable frequency band information of the each network system of the mobile terminal device according to the frequency band information of the each network system supported by the mobile terminal device that is acquired from the system broadcast message and the enable frequency band information and the disable frequency band information of the each network system of the mobile terminal device that are found in the configuration information table comprises:
performing "AND" operation on the frequency band information of the each network system supported by the mobile terminal device that is acquired from the system broadcast message and the enable frequency band information of the each network system of the mobile terminal device found in the configuration information table in terms of the each network system respectively, and then performing "OR" operation on a result obtained after the "AND" operation for the each network system, and using a result of the "OR" operation as the final enable frequency band information of the mobile terminal device; and
performing "AND" operation on the frequency band information of the each network system supported by the mobile terminal device that is acquired from the system broadcast message and the disable frequency band information of the each network system of the mobile terminal device found in the configuration information table in terms of the each network system respectively, and then performing "AND" operation again on a result obtained after the "AND" operation for the each network system, and using a result of the "AND" operation performed again as the final disable frequency band information of the mobile terminal device.

2. The method according to claim 1, wherein
a network system of the mobile terminal device comprises one or more of the following network systems: Global System for Mobile Communications, GSM, Wideband Code Division Multiple Access, WCDMA, and Long Term Evolution, LTE.

3. An apparatus for acquiring a network service via frequency band information, the apparatus being provided in a mobile terminal device, and the apparatus comprising:
a connection module (11) configured to establish a channel connection and acquire a system broadcast message;
**characterized by** further comprising:
a generation module (12) configured to generate final frequency band information of each network system of the mobile terminal device according to a model of the mobile terminal device, a mobile country code, MCC, and a mobile network code, MNC, when determining that final frequency band information of the mobile terminal device is not generated; and
a service acquisition module (13) configured to acquire the network service according to the final frequency band information;
whererin the final frequency band information comprises final enable frequency band information and final disable frequency band information; and
the generation module (12) comprises an acquiring submodule, a finding submodule and a generating submodule, wherein
the acquiring submodule is configured to acquire the MCC and the MNC of a network to which the mobile terminal device registers and acquire frequency band information of each network system supported by the mobile terminal device from the system broadcast message;
the finding submodule is configured to find, in a configuration information table acquired when the mobile terminal device is powered on to start, enable frequency band information and disable frequency band information of the each network system of the mobile terminal device according to the model of the mobile terminal device, the MCC and the MNC; and
the generating submodule is configured to generate the final enable frequency band information and the final disable frequency band information of the each network system of the mobile terminal device according to the frequency band information of the each network system supported by the mobile terminal device that is acquired from the system broadcast message and the enable frequency band information and the disable frequency band information of the each network system of the mobile terminal device that are found in the configuration information table;
wherein the service acquisition module (13) is configured to re-initiate a network service acquisition request, wherein the network service acquisition request carries the final enable frequency band information and the final disable frequency band information of the mobile terminal device;
wherein the generating submodule is configured to perform "AND" operation on the frequency band information of the each network system supported by the mobile terminal device that is acquired from the system broadcast message and the enable frequency band information of the each network system of the mobile terminal device found in the configuration information table in terms of the each network system respectively, and then perform "OR" operation on a result obtained after the "AND" operation for the each network system, and use a result of the "OR" operation as the final enable frequency band information of the mobile terminal device; and perform "AND" operation on the frequency band information of the each network system supported by the mobile terminal device that is acquired from the system broadcast message and the disable frequency band information of the each network system of the mobile terminal device found in the configuration information table in terms of the each network system respectively, and then perform "AND" operation again on a result obtained after the "AND" operation for the each network system, and use a result of the "AND" operation performed again as the final disable frequency band information of the mobile terminal device.

4. The apparatus according to claim 3, wherein,
a network system of the mobile terminal device comprises one or more of the following network systems: Global System for Mobile Communications, GSM, Wideband Code Division Multiple Access, WCDMA, and Long Term Evolution, LTE.

5. A computer readable storage medium where computer executable instructions are stored, wherein the computer executable instructions when executed by the apparatus of claim 3, cause the apparatus to implement the method according to claim 1 or 2.

## Patentansprüche

1. Verfahren zum Erfassen eines Netzwerkdienstes durch Frequenzbanddaten, wobei das Verfahren von einem mobilen Endgerät ausgeführt wird und umfasst:
Herstellen (S101, 302) einer Kanalverbindung und Erfassen einer Systemmeldung durch das mobile Endgerät,
**dadurch gekennzeichnet**, das es ferner umfasst:
Erzeugen (S102) von endgültigen Frequenzbanddaten jedes Netzwerksystems des mobilen Endgeräts gemäß einer Bauart des mobilen Endgeräts, einem Mobilfunk-Ländercode MCC und einem Mobilnetzwerkcode MNC bei der Bestimmung, dass endgültige Frequenzbanddaten des mobilen Endgeräts nicht erzeugt werden, und
Erfassen (S103) des Netzwerkdienstes durch das mobile Endgerät gemäß den endgültigen Frequenzbanddaten,
wobei die endgültigen Frequenzbanddaten endgültige Aktivationsfrequenzbanddaten und endgültige Deaktivationsfrequenzbanddaten umfassen und
das Erzeugen (S103) von endgültigen Frequenzbanddaten jedes Netzwerksystems des mobilen Endgeräts gemäß einer Bauart des mobilen Endgeräts, einem Mobilfunk-Ländercode MCC und einem Mobilnetzwerkcode MNC bei der Bestimmung, dass endgültige Frequenzbanddaten des mobilen Endgeräts nicht erzeugt werden, umfasst:
Erfassen (305) von MCC und MNC eines Netzwerks, bei dem sich das mobile Endgerät anmeldet, und Erfassen von Frequenzbanddaten jedes Netzwerksystems, das vom mobilen Endgerät unterstützt wird, aus der Systemmeldung,
Auffinden (306) von Aktivations- und Deaktivationsfrequenzbanddaten jedes Netzwerksystems des mobilen Endgeräts gemäß der Bauart des mobilen endgeräts, dem MCC und dem MNC in einer Konfigurationsdatentablle, die beim Hochfahren des mobilen Endgeräts erfasst wird,
Erzeugen (307) der endgültigen Aktivations- und der endgültigen Deaktivationsfrequenzbanddaten jedes Netzwerksystems des mobilen Endgeräts gemäß den Frequenzbanddaten jedes Netzwerksystems, das vom mobilen Endgerät unterstützt wird, die aus der Systemmeldung erfasst werden, und der Aktivations- und Deaktivationsfrequenzbanddaten jedes Netzwerksystems des mobilen Endgeräts, die der Konfigurationsdatentabelle zu entnehmen sind,
wobei das Erfassen (S103) des Netzwerkdienstes durch das mobile Endgerät gemäß den endgültigen Frequenzbanddaten umfasst:
Reinitiieren (308) einer Netzwerkdienstanfrage, wobei die Netzwerkdienstanfrage die endgültigen Aktivationsfrequenzbanddaten und die endgültigen Deaktivationsfrequenzbanddaten des mobilen Endgeräts enthält,
wobei Erzeugen (307) der endgültigen Aktivations- und der endgültigen Deaktivationsfrequenzbanddaten jedes Netzwerksystems des mobilen Endgeräts gemäß den Frequenzbanddaten jedes Netzwerksystems, das vom mobilen Endgerät unterstützt wird, die aus der Systemmeldung erfasst werden, und der Aktivations- und Deaktivationsfrequenzbanddaten jedes Netzwerksystems des mobilen Endgeräts, die der Konfigurationsdatentabelle zu entnehmen sind, umfasst:
Ausführen einer AND-Operation an den Frequenzbanddaten jedes Netzwerksystems, das vom mobilen Endgerät unterstützt wird, die aus der Systemmeldung erfasst werden und den Aktivationsfrequenzbanddaten jedes Netzwerksystems des mobilen Endgeräts, die der Konfigurationsdatentabelle zu entnehmen sind, im Sinne von jedem jeweiligen Netzwerksystem, gefolgt durch Ausführen einer OR-Operation an einem nach der AND-Operation resultierenden Ergebnis für jedes Netzwerksystem und Verwenden eines Ergebnisses der OR-Operation als endgültiger Aktivationsfrequenzbanddaten des mobilen Endgeräts und
Ausführen einer AND-Operation an den Frequenzbanddaten jedes Netzwerksystems, das vom mobilen Endgerät unterstützt wird, die aus der Systemmeldung erfasst werden und den Deaktivationsfrequenzbanddaten jedes Netzwerksystems des mobilen Endgeräts, die der Konfigurationsdatentabelle zu entnehmen sind, im Sinne von jedem jeweiligen Netzwerksystem, gefolgt durch nochmaliges Ausführen einer AND-Operation an einem nach der AND-Operation resultierenden Ergebnis für jedes Netzwerksystem und Verwenden eines Ergebnisses der noch einmal ausgeführten AND-Operation als endgültiger Deaktivationsfrequenzbanddaten des mobilen Endgeräts.

2. Verfahren nach Anspruch 1, wobei:
ein Netzwerksystem des mobilen Endgeräts mindestens eines folgender Netzwerksysteme umfasst: GSM (Global System for Mobile Communications), WCDMA (Wideband Code Division Multiple Access) und LTE (Long Term Evolution).

3. Vorrichtung zum Erfassen eines Netzwerkdienstes durch Frequenzbanddaten, wobei die Vorrichtung in einem mobilen Endgerät vorgesehen ist und umfasst:
ein Verbindungsmodul (11), das derart konfiguriert ist, dass es eine Kanalverbindung herstellt und eine Systemmeldung erfasst,
**dadurch gekennzeichnet**, das sie ferner umfasst:
ein Erzeugungsmodul (12), das konfiguriert ist zum Erzeugen von endgültigen Frequenzbanddaten jedes Netzwerksystems des mobilen Endgeräts gemäß einer Bauart des mobilen Endgeräts, einem Mobilfunk-Ländercode MCC und einem Mobilnetzwerkcode MNC bei der Bestimmung, dass endgültige Frequenzbanddaten des mobilen Endgeräts nicht erzeugt werden, und
ein Diensterfassungsmodul (13), das derart konfiguriert ist, dass es den Netzwerkdienst gemäß den endgültigen Frequenzbanddaten erfasst,
wobei die endgültigen Frequenzbanddaten endgültige Aktivationsfrequenzbanddaten und endgültige Deaktivationsfrequenzbanddaten umfassen und
das Erzeugungsmodul (12) ein Erfassungs-Submodul, ein Such-Submodul und ein Erzeugungs-Submodul umfasst, wobei
das Erfassungs-Submodul konfiguriert ist zum Erfassen von MCC und MNC eines Netzwerks, bei dem sich das mobile Endgerät anmeldet, und zum Erfassen von Frequenzbanddaten jedes Netzwerksystems, das vom mobilen Endgerät unterstützt wird, aus der Systemmeldung,
das Such-Submodul konfiguriert ist zum Auffinden von Aktivations- und Deaktivationsfrequenzbanddaten jedes Netzwerksystems des mobilen Endgeräts gemäß der Bauart des mobilen endgeräts, dem MCC und dem MNC in einer Konfigurationsdatentablle, die beim Hochfahren des mobilen Endgeräts erfasst wird,
das Erzeugungs-Submodul konfiguriert ist zum Erzeugen der endgültigen Aktivations- und der endgültigen Deaktivationsfrequenzbanddaten jedes Netzwerksystems des mobilen Endgeräts gemäß den Frequenzbanddaten jedes Netzwerksystems, das vom mobilen Endgerät unterstützt wird, die aus der Systemmeldung erfasst werden, und der Aktivations- und Deaktivationsfrequenzbanddaten jedes Netzwerksystems des mobilen Endgeräts, die der Konfigurationsdatentabelle zu entnehmen sind,
wobei das Diensterfassungsmodul (13) derart konfiguriert ist, dass es eine Netzwerkdienstanfrage reinitiiert, wobei die Netzwerkdienstanfrage die endgültigen Aktivationsfrequenzbanddaten und die endgültigen Deaktivationsfrequenzbanddaten des mobilen Endgeräts enthält,
wobei das Erzeugungs-Submodul konfiguriert ist zum Ausführen einer AND-Operation an den Frequenzbanddaten jedes Netzwerksystems, das vom mobilen Endgerät unterstützt wird, die aus der Systemmeldung erfasst werden und den Aktivationsfrequenzbanddaten jedes Netzwerksystems des mobilen Endgeräts, die der Konfigurationsdatentabelle zu entnehmen sind, im Sinne von jedem jeweiligen Netzwerksystem, gefolgt durch Ausführen einer OR-Operation an einem nach der AND-Operation resultierenden Ergebnis für jedes Netzwerksystem und Verwenden eines Ergebnisses der OR-Operation als endgültiger Aktivationsfrequenzbanddaten des mobilen Endgeräts und
zum Ausführen einer AND-Operation an den Frequenzbanddaten jedes Netzwerksystems, das vom mobilen Endgerät unterstützt wird, die aus der Systemmeldung erfasst werden und den Deaktivationsfrequenzbanddaten jedes Netzwerksystems des mobilen Endgeräts, die der Konfigurationsdatentabelle zu entnehmen sind, im Sinne von jedem jeweiligen Netzwerksystem, gefolgt durch nochmaliges Ausführen einer AND-Operation an einem nach der AND-Operation resultierenden Ergebnis für jedes Netzwerksystem und Verwenden eines Ergebnisses der noch einmal ausgeführten AND-Operation als endgültiger Deaktivationsfrequenzbanddaten des mobilen Endgeräts.

4. Vorrichtung nach Anspruch 3, wobei:
ein Netzwerksystem des mobilen Endgeräts mindestens eines folgender Netzwerksysteme umfasst: GSM (Global System for Mobile Communications), WCDMA (Wideband Code Division Multiple Access) und LTE (Long Term Evolution).

5. Computerlesbarer Datenträger, auf dem von einem Computer ausführbare Befehle gespeichert sind,
wobei die von einem Computer ausführbaren Befehle bei Ausführung durch die Vorrichtung nach Anspruch 3 die Vorrichtung dazu veranlassen, das Verfahren nach Anspruch 1 oder 2 auszuführen.

## Revendications

1. Procédé d'acquisition d'un service de réseau par l'intermédiaire d'informations de bande de fréquences, le procédé étant mis en œuvre par un dispositif terminal mobile, et le procédé comprenant l'étape ci-dessous consistant à :
établir (S101, 302), par le biais du dispositif terminal mobile, une connexion de canal et acquérir un message de diffusion système ;
**caractérisé en ce qu'**il comprend en outre les étapes ci-dessous consistant à :
générer (S102) des informations de bande de fréquences finale de chaque système de réseau du dispositif terminal mobile selon un modèle du dispositif terminal mobile, un code de pays mobile, MCC, et un code de réseau mobile, MNC, dans le cadre d'une détermination que des informations de bande de fréquences finale du dispositif terminal mobile ne sont pas générées ; et
acquérir (S103), par le biais du dispositif terminal mobile, le service de réseau, selon les informations de bande de fréquences finale ;
dans lequel les informations de bande de fréquences finale comprennent des informations de bande de fréquences d'activation finale et des informations de bande de fréquences de désactivation finale ; et
l'étape de génération (S103) d'informations de bande de fréquences finale de chaque système de réseau du dispositif terminal mobile selon un modèle du dispositif terminal mobile, un code de pays mobile, MCC, et un code de réseau mobile, MNC, dans le cadre de la détermination que les informations de bande de fréquences finale du dispositif terminal mobile ne sont pas générées, comprend les étapes ci-dessous consistant à :
acquérir (305) le code MCC et le code MNC d'un réseau auprès duquel le dispositif terminal mobile s'enregistre, et acquérir des informations de bande de fréquences dudit chaque système de réseau pris en charge par le dispositif terminal mobile à partir du message de diffusion système ;
trouver (306), dans une table d'informations de configuration acquise lorsque le dispositif terminal mobile est mis sous tension pour démarrer, des informations de bande de fréquences d'activation et des informations de bande de fréquences de désactivation dudit chaque système de réseau du dispositif terminal mobile selon le modèle du dispositif terminal mobile, le code MCC et le code MNC ; et
générer (307) les informations de bande de fréquences d'activation finale et les informations de bande de fréquences de désactivation finale dudit chaque système de réseau du dispositif terminal mobile selon les informations de bande de fréquences dudit chaque système de réseau du dispositif terminal mobile pris en charge par le dispositif terminal mobile, qui sont acquises à partir du message de diffusion système, et les informations de bande de fréquences d'activation et les informations de bande de fréquences de désactivation dudit chaque système de réseau du dispositif terminal mobile qui sont trouvées dans la table d'informations de configuration ;
dans lequel l'étape d'acquisition (S103), par le dispositif terminal mobile, du service de réseau selon les informations de bande de fréquences finale comprend les étapes ci-dessous consistant à :
réinitialiser (308) une demande d'acquisition de service de réseau, dans lequel la demande d'acquisition de service de réseau transporte les informations de bande de fréquences d'activation finale et les informations de bande de fréquences de désactivation finale du dispositif terminal mobile ;
dans lequel l'étape de génération (307) des informations de bande de fréquences d'activation finale et des informations de bande de fréquences de désactivation finale dudit chaque système de réseau du dispositif terminal mobile selon les informations de bande de fréquences dudit chaque système de réseau pris en charge par le dispositif terminal mobile, qui sont acquises à partir du message de diffusion système, et les informations de bande de fréquences d'activation et les informations de bande de fréquences de désactivation dudit chaque système de réseau du dispositif terminal mobile qui sont trouvées dans la table d'informations de configuration, comprend les étapes ci-dessous consistant à :
mettre en œuvre une opération booléenne « ET » sur les informations de bande de fréquences dudit chaque système de réseau pris en charge par le dispositif terminal mobile, qui sont acquises à partir du message de diffusion système, et les informations de bande de fréquences d'activation dudit chaque système de réseau du dispositif terminal mobile qui sont trouvées dans la table d'informations de configuration, en termes dudit chaque système de réseau, respectivement, et mettre ensuite en œuvre une opération booléenne « OU » sur un résultat obtenu après l'opération booléenne « ET » pour ledit chaque système de réseau, et utiliser un résultat de l'opération booléenne « OU » en tant que les informations de bande de fréquences d'activation finale du dispositif terminal mobile ; et
mettre en œuvre une opération booléenne « ET » sur les informations de bande de fréquences dudit chaque système de réseau pris en charge par le dispositif terminal mobile qui sont acquises à partir du message de diffusion système, et les informations de bande de fréquences de désactivation dudit chaque système de réseau du dispositif terminal mobile qui sont trouvées dans la table d'informations de configuration, en termes dudit chaque système de réseau, respectivement, et mettre ensuite en œuvre à nouveau une opération booléenne « ET » sur un résultat obtenu après l'opération booléenne « ET » pour ledit chaque système de réseau, et utiliser un résultat de l'opération booléenne « ET » mise en œuvre à nouveau en tant que les informations de bande de fréquences de désactivation finale du dispositif terminal mobile.

2. Procédé selon la revendication 1, dans lequel :
un système de réseau du dispositif terminal mobile comprend un ou plusieurs des systèmes de réseau suivants : un système mondial de communication avec les mobiles, GSM, un système d'accès multiple par répartition en code à large bande, WCDMA, et un système de technologie d'évolution à long terme, LTE.

3. Appareil destiné à acquérir un service de réseau par l'intermédiaire d'informations de bande de fréquences, l'appareil étant fourni dans un dispositif terminal mobile, et l'appareil comprenant :
un module de connexion (11) configuré de manière à établir une connexion de canal et à acquérir un message de diffusion système ;
**caractérisé en ce qu'**il comprend en outre :
un module de génération (12) configuré de manière à générer des informations de bande de fréquences finale de chaque système de réseau du dispositif terminal mobile selon un modèle du dispositif terminal mobile, un code de pays mobile, MCC, et un code de réseau mobile, MNC, dans le cadre d'une détermination que des informations de bande de fréquences finale du dispositif terminal mobile ne sont pas générées ; et
un module d'acquisition de service (13) configuré de manière à acquérir le service de réseau selon les informations de bande de fréquences finale ;
dans lequel les informations de bande de fréquences finale comprennent des informations de bande de fréquences d'activation finale et des informations de bande de fréquences de désactivation finale ; et
le module de génération (12) comprend un sous-module d'acquisition, un sous-module de recherche et un sous-module de génération, dans lequel
le sous-module d'acquisition est configuré de manière à acquérir le code MCC et le code MNC d'un réseau auprès duquel le dispositif terminal mobile s'enregistre, et à acquérir des informations de bande de fréquences de chaque système de réseau pris en charge par le dispositif terminal mobile à partir du message de diffusion système ;
le sous-module de recherche est configuré de manière à trouver, dans une table d'informations de configuration acquise lorsque le dispositif terminal mobile est mis sous tension pour démarrer, des informations de bande de fréquences d'activation et des informations de bande de fréquences de désactivation dudit chaque système de réseau du dispositif terminal mobile selon le modèle du dispositif terminal mobile, le code MCC et le code MNC ; et
le sous-module de génération est configuré de manière à générer les informations de bande de fréquences d'activation finale et les informations de bande de fréquences de désactivation finale dudit chaque système de réseau du dispositif terminal mobile selon les informations de bande de fréquences dudit chaque système de réseau pris en charge par le dispositif terminal mobile, qui sont acquises à partir du message de diffusion système, et les informations de bande de fréquences d'activation et les informations de bande de fréquences de désactivation dudit chaque système de réseau du dispositif terminal mobile qui sont trouvées dans la table d'informations de configuration ;
dans lequel le module d'acquisition de service (13) est configuré de manière à réinitialiser une demande d'acquisition de service de réseau, dans lequel la demande d'acquisition de service de réseau transporte les informations de bande de fréquences d'activation finale et les informations de bande de fréquences de désactivation finale du dispositif terminal mobile ;
dans lequel le sous-module de génération est configuré de manière à mettre en œuvre une opération booléenne « ET » sur les informations de bande de fréquences dudit chaque système de réseau pris en charge par le dispositif terminal mobile, qui sont acquises à partir du message de diffusion système, et les informations de bande de fréquences d'activation dudit chaque système de réseau du dispositif terminal mobile qui sont trouvées dans la table d'informations de configuration, en termes dudit chaque système de réseau, respectivement, et à mettre ensuite en œuvre une opération booléenne « OU » sur un résultat obtenu après l'opération booléenne « ET » pour ledit chaque système de réseau, et à utiliser un résultat de l'opération booléenne « OU » en tant que les informations de bande de fréquences d'activation finale du dispositif terminal mobile ; et à mettre en œuvre une opération booléenne « ET » sur les informations de bande de fréquences dudit chaque système de réseau pris en charge par le dispositif terminal mobile qui sont acquises à partir du message de diffusion système, et les informations de bande de fréquences de désactivation dudit chaque système de réseau du dispositif terminal mobile qui sont trouvées dans la table d'informations de configuration, en termes dudit chaque système de réseau, respectivement, et à mettre ensuite en œuvre une opération booléenne « ET » à nouveau sur un résultat obtenu après l'opération booléenne « ET » pour ledit chaque système de réseau, et à utiliser un résultat de l'opération booléenne « ET » mise en œuvre à nouveau en tant que les informations de bande de fréquences de désactivation finale du dispositif terminal mobile.

4. Appareil selon la revendication 3, dans lequel :
un système de réseau du dispositif terminal mobile comprend un ou plusieurs des systèmes de réseau suivants : un système mondial de communication avec les mobiles, GSM, un système d'accès multiple par répartition en code à large bande, WCDMA, et un système de technologie d'évolution à long terme, LTE.

5. Support de stockage lisible par ordinateur sur lequel sont stockées des instructions exécutables par ordinateur, dans lequel les instructions exécutables par ordinateur, lorsqu'elles sont exécutées par l'appareil selon la revendication 3, amènent l'appareil à mettre en œuvre le procédé selon la revendication 1 ou 2.
